# EUROPEAN PATENT APPLICATION

(11) **EP 4 749 998 A1**
(43) Date of publication of application: **27.05.2026**
(21) Application number: 24214177.8
(22) Date of filing: 20.11.2024
(51) Int. Cl.: H04L 9/40, H04L 9/08, G06F 21/60

(54) **TECHNIQUES FOR PROVIDING AN ENTANGLEMENT DISTRIBUTION FOR QUANTUM APPLICATIONS IN FORM OF AN ENTANGLEMENT DISTRIBUTION AS A SERVICE (EDAAS)**

(71) Applicant: Deutsche Telekom AG, 53113 Bonn (DE)
(72) Inventor: GEITZ, Marc, 58089 Hagen (DE); YIN, Ming, 16341 Panketal (DE)
(74) Representative: karo IP

(57) **Abstract**

A system for providing an entanglement distribution for quantum applications in form of an Entanglement Distribution as a Service (EDaaS), comprising:
A network provider plane configured to manage the generation, distribution, forwarding, and storage of entangled quantum states across a quantum network, the network provider plane comprising:
- One or more quantum optical elements especially single photon sources, fiber-optic links, beam splitters, single-photon detectors, and quantum memories for generating and maintaining entangled photonic states;
- A quantum link layer providing quantum optical connections to distribute entangled photon states between directly connected network nodes;
- A quantum network layer configured for dynamic routing of quantum states across multiple optical paths between network nodes;

An Application Programming Interface (EdaaS-API) operable at the service level, said API comprising:
- A state retrieval interface configured to provide applications with logical and physical addresses of stored quantum states within the quantum memories;
- A Q-Push interface configured to enable the export of selected quantum states, based on physical storage addresses, over a quantum channel by triggering the release of entangled photon states;

A software-defined network (SDN) management layer configured to dynamically manage the configuration, monitoring, and routing of entangled states across the quantum network, said SDN management layer comprising:
- A service configuration module for the deployment and configuration of quantum optical connections;
- A resource allocation module for dynamically routing quantum states through optimal optical paths in response to service demands.

## Description

Quantum entanglement is a fundamental phenomenon in quantum mechanics, where two or more particles become linked in such a way that the state of one particle is directly related to the state of the other(s), regardless of the distance separating them. Once entangled, the measurement of one particle's quantum state (such as its spin, polarization, or position) instantly determines the state of the other entangled particles. This happens even if the particles are separated by vast distances, a concept famously described by Einstein as "spooky action at a distance." The key feature of entanglement is the perfect correlation between particles, even though their individual quantum states remain indeterminate until observed.

Quantum entanglement is a crucial enabler for creating a wide range of advanced quantum applications, including quantum communication, quantum computing, and quantum sensing. Its unique ability to create non-local correlations between particles forms the foundation of technologies that offer capabilities far beyond classical systems.

Quantum Communication: One of the most important uses of quantum entanglement is in quantum communication, where it enables ultra-secure transmission of information. A prime example is Quantum Key Distribution (QKD), a protocol that uses entangled particles to establish encryption keys between two communicating parties. In QKD, the use of entangled quantum states ensures that any attempt to eavesdrop on the communication would disturb the entanglement, making the intrusion detectable and thereby providing a level of security that is theoretically immune to interception.

Another powerful application in quantum communication is quantum teleportation. Quantum entanglement allows for the instantaneous transfer of quantum states between distant locations without physically transmitting the particles themselves. This process enables the secure and instant transmission of information across long distances, providing a foundation for future quantum networks.

Quantum Computing: In the realm of quantum computing, entanglement is essential for the operation of quantum gates and algorithms. Unlike classical computers, which process information in binary bits (0 and 1), quantum computers use qubits, which can exist in a superposition of states. Entangled qubits allow quantum computers to perform highly complex calculations in parallel, offering exponential speed-ups for certain types of problems, such as factoring large numbers or simulating molecular interactions. This makes entanglement a key resource for unlocking the computational power of quantum computers.

In addition, quantum error correction relies heavily on entanglement to detect and correct errors in quantum computations. Quantum systems are inherently fragile and prone to errors due to noise and decoherence. By leveraging entangled states, quantum error correction codes can safeguard information, ensuring the reliability of quantum computing operations. This is a critical step toward building fault-tolerant quantum computers capable of performing large-scale computations.

Quantum Sensing and Metrology: Beyond communication and computing, quantum entanglement also plays a crucial role in quantum sensing and metrology. Entangled particles can be used to enhance the precision of measurements beyond the classical limits imposed by conventional technologies. For example, quantum sensors can be used in applications such as GPS, medical imaging, and timekeeping, where precise measurements are essential. In these fields, entanglement allows for improved sensitivity and accuracy, pushing the boundaries of what is achievable with classical measurement systems.

By harnessing quantum entanglement, quantum sensors can detect minute changes in physical quantities such as time, gravitational fields, or magnetic fields with far greater precision than classical sensors. This opens the door to new technological advances that could revolutionize industries ranging from healthcare to aerospace.

Fundamental Research: On a more fundamental level, quantum entanglement continues to be a key subject of research in quantum mechanics. Entanglement is used to test the foundational principles of quantum theory and probe the limits of the quantum world. Experiments with entangled particles, such as Bell's theorem tests, provide insight into the non-local nature of quantum mechanics, challenging classical views of reality and causality.

Studying entangled systems not only deepens our understanding of quantum theory but also leads to potential technological breakthroughs. As scientists explore the fundamental properties of entanglement, they continue to discover new ways that leverage this phenomenon to develop advanced technologies.

Generally, quantum entanglement is indispensable for building the next generation of quantum technologies. In quantum communication, entanglement enables ultra-secure methods for sharing information through protocols like QKD, ensuring that communication is theoretically secure against any form of eavesdropping. In quantum computing, entanglement is foundational for the development of quantum gates, complex algorithms, and error correction codes that are essential for achieving reliable quantum computation at scales classical systems cannot reach. Similarly, in quantum sensing and metrology, entanglement provides enhanced precision for measuring physical quantities, leading to advancements in critical fields like healthcare, navigation, and timekeeping.

Additionally, entanglement drives progress in fundamental research by enabling experiments that test and expand the boundaries of quantum theory. These studies provide insights that could lead to entirely new applications and discoveries, further broadening the potential impact of quantum technologies.

In summary, quantum entanglement is a foundational element in the development of quantum communication, quantum computing, and quantum sensing, all of which promise to revolutionize industries by offering unprecedented levels of security, computational power, and sensing precision. As these technologies continue to evolve, the ability to efficiently generate, distribute, and harness entanglement will be crucial to realizing their full potential.

For background information, reference is made to
- Anton Zeilinger "Quantum entanglement: a fundamental concept finding its applications", 1998 Phys.Scr. 1998 203 DOI 10.1238/Physica.Topical.076a002 03
- Zhonghui Li, et al., "Entanglement-Assisted Quantum Networks: Mechanics, Enabling Technologies, Challenges, and Research Directions", arXiv:2307.12490v2
- Jasleen Kour, et al., "A Survey on Quantum Key Distribution Protocols", DOI: 1 0.5121/ijcsa.2017.7302
- Abhishek Parakh, "Quantum teleportation with one classical bit", https://www.nature.com/articles/s41598-022-06853-w
- Jianxin Shi & Shanshan Shen, "A clock synchronization method based on quantum entanglement", https://www.nature.com/articles/s41598-022-14087-z
- "Understanding Superdense Coding", https://medium.com/geekculture/understanding-superdense-coding-c10b42adecca

A significant challenge in the development of entanglement-based quantum applications is the siloed approach that many projects currently adopt. In most cases, applications that require quantum entanglement for secure communication, computation, or sensing must independently implement their own entanglement management functions. This means that each application is responsible for generating, distributing, and maintaining entangled quantum states, which involves significant technical overhead. The infrastructure needed to establish and manage entanglement, such as quantum optical elements, quantum memories, and error correction mechanisms, is highly specialized, making it both costly and time-consuming to develop from scratch. Currently, each entanglement-based application has been developed in isolation.

This siloed approach not only increases development costs but also slows down the broader adoption of quantum technologies. Developers of entanglement-based applications often need to divert substantial resources to building the foundational entanglement management layer, instead of focusing on the higher-level functionality of their applications. That each application effectively reinvents the wheel, resulting in duplicated effort across the industry. This fragmentation hinders scalability and limits collaboration across projects, slowing progress in the commercialization and deployment of quantum communication, quantum computing, and sensing technologies. Without a solution for efficiently generating and distributing entangled states, the potential of quantum applications remains constrained by these significant development barriers.

The main problems in the current state of the art are the significant inefficiencies and, consequently, the high costs associated with developing new entanglement-based quantum applications.

These problems are solved by the system of claim 1 and the method of claim 10. The respective dependent features comprise preferred embodiments of the invention.

The main idea is to find new ways to rapidly and efficiently develop entanglement-based quantum applications using an Entanglement Distribution as a Service (EDaaS) platform. Such applications are, for example, quantum key distribution, quantum superdense coding, quantum teleportation, quantum time synchronization. The invention provides a centralized service for generating, distributing, and managing entangled quantum states, removing the need for individual applications to build their own entanglement management infrastructure.

The new programming paradigm based on a method providing entanglement distribution in form of an "Entanglement Distribution as a Service (EDaaS)", which can dynamically change the entanglement-based quantum application development process. EDaaS serves as a common foundation shared by many quantum application developments. By leveraging commonly available entanglement management infrastructure, new entanglement-based applications can be developed more efficiently. This invention will cover the usage / application part of the EDaaS.

The inventive EDaaS platform handles entangled photon pair generation, quantum state storage, and management while exposing these capabilities via an API. Entanglement-based quantum applications can be developed on top of this service API. The development of quantum applications based on EDaaS API and an overall system architecture have been described in this invention.

In summary, the main idea of the invention is to provide a centralized platform for entanglement distribution in quantum networks, addressing the inefficiency and high costs typically associated with the development of quantum applications. In conventional systems, each application must build and manage its own entanglement infrastructure, which is resource-intensive and limits scalability. The disclosed system solves this issue by offering a centralized EDaaS that generates, distributes, forwards, and stores entangled quantum states across a quantum network. This is achieved through a network provider plane that consolidates essential quantum optical elements, such as photon sources, fiber-optic links, beam splitters, single-photon detectors, and quantum memories, for creating and maintaining entangled quantum states. The inclusion of a quantum link layer ensures that entangled states can be distributed between nodes, while the quantum network layer dynamically routes these states across multiple optical paths, optimizing the efficiency of the system.

The invention further incorporates an EDaaS API, allowing applications to interface with the quantum network to retrieve and export entangled quantum states as needed. This API eliminates the need for applications to manage their own quantum infrastructure, significantly reducing the time and cost required for development. Additionally, the system is managed by a software-defined network (SDN) layer, which dynamically configures, monitors, and routes the entangled states, enhancing the flexibility and adaptability of the service. The SDN ensures that resources are allocated optimally, further improving the overall efficiency of entanglement management in the network.

The respective method describes the process of providing this centralized entanglement distribution service, covering the generation of entangled states, their distribution via the quantum link layer, dynamic routing through the quantum network layer, and storage in quantum memories. The method also includes providing access to these states through the EDaaS-API, allowing applications to make use of the entangled states without the need for individual entanglement management systems. The entire process is controlled and optimized via the SDN, ensuring real-time adaptation to network conditions and efficient resource utilization.

In a preferred embodiment, the system includes one or more quantum communication applications implemented on the application plane. This application plane is divided into a logical layer and a physical layer. The logical layer is responsible for managing application-level functions, such as handling quantum communication protocols (including Quantum Key Distribution (QKD), superdense coding, or quantum teleportation). The physical layer interacts directly with the quantum states distributed by the network provider plane, consuming and processing the entangled states stored in quantum memories. This embodiment simplifies the integration of quantum applications with the entanglement distribution infrastructure by separating high-level control from low-level physical operations. The advantage of this approach is that it allows developers to focus on implementing quantum protocols in the logical layer, while the physical layer manages the complexities of interacting with the entanglement resources, thus streamlining the development process and improving overall system efficiency.

In a preferred embodiment, the quantum communication applications on the application plane can access the entangled quantum states stored and maintained by the EDaaS. Through this access, applications can trigger quantum communication protocols using the EDaaS-API, facilitating operations such as quantum key distribution and quantum state teleportation. This embodiment provides a seamless connection between the entanglement service and quantum applications, ensuring that the quantum states are readily available for performing secure and complex quantum operations. The advantage of this feature is that it significantly reduces development time by allowing applications to leverage a pre-established entanglement infrastructure, eliminating the need for individual applications to manage their own quantum state generation and distribution processes. This access to centralized entangled states enables more rapid and efficient deployment of quantum communication solutions, particularly in scenarios requiring high security and real-time performance.

Another advantageous embodiment introduces an authentication, authorization, and accounting (AAA) module within the EDaaS-API. This module controls access to the entanglement service by authenticating users, managing permissions, and tracking usage. By ensuring that only authorized applications and users can interact with the entangled states, the AAA module adds an important layer of security to the system. This feature is especially beneficial in multi-user environments or commercial quantum networks, where secure access control is crucial.

In a further preferred embodiment, the EDaaS-API includes a time synchronization interface, which synchronizes the clocks of user applications with the clocks of the entanglement distribution service. This ensures that entangled states are accurately assigned to specific time slots during quantum operations, a critical requirement for ensuring precise timing in quantum communication protocols. The advantage of this feature is that it guarantees synchronization between different nodes, improving the reliability of quantum applications that rely on precise timing, such as quantum key distribution (QKD) and quantum teleportation.

In another embodiment, the system employs quantum repeaters within the quantum link layer to extend the range of entanglement distribution. Quantum repeaters are essential for maintaining entanglement over long distances, as they mitigate the effects of signal degradation that typically occur in quantum communication channels. This feature enables long-distance quantum communication, making it feasible to distribute entanglement across vast geographical areas, such as between cities or even between satellites and ground stations.

Additionally, the system can support dynamic routing of quantum states within the quantum network layer, which adjusts optical paths based on network conditions such as congestion, latency, or resource availability. This ensures that the entangled states are transmitted along the most efficient routes, improving overall network performance and reducing bottlenecks. The primary advantage of this feature is its ability to respond dynamically to changing network conditions, maintaining high quality of service (QoS) and enhancing the scalability of the quantum network.

A further preferred embodiment enhances the Q-Push interface by enabling real-time export of quantum states, This feature applications to immediately trigger the release of entangled quantum states on demand, which is particularly useful for on-demand quantum communication or computational processes that require real-time access to quantum states. The real-time export capability improves the flexibility and responsiveness of the system, ensuring that entangled states are readily available without delays, thereby optimizing operational efficiency.

It can be further advantageous, when the system includes an SDN monitoring and alarm module that detects and reports faults or inefficiencies in the entanglement distribution process. This feature ensures that any issues within the network are quickly identified and addressed, minimizing downtime and maintaining the system reliability. The monitoring and alarm capability is crucial for ensuring continuous operation and real-time troubleshooting within a complex quantum network.

Since quantum systems, particularly those relying on entanglement, are inherently sensitive to noise, decoherence, and other environmental factors that can lead to errors during transmission and processing, it may be advantageous to enhance the system with a quantum error detection and correction mechanism integrated directly into the EDaaS. Given that the EDaaS is responsible for generating, distributing, and storing entangled quantum states, ensuring the integrity and stability of these states over time and distance is critical, especially in large-scale or long-distance quantum networks.

A quantum error correction module could be added to the network provider plane or integrated into the SDN management layer. This module would monitor entangled quantum states as they are distributed across the quantum network and correct errors caused by noise, loss, or interference.

By implementing real-time error detection and correction, the system could maintain the fidelity of entangled states across long distances or through challenging network conditions. This would enhance the system's robustness for mission-critical applications, such as secure communication or distributed quantum computing. Additionally, The inclusion of error correction mechanisms would also enable longer-distance quantum communication, preserving the integrity of entanglement as it is routed across more complex or larger-scale quantum networks.

When integrated with quantum repeaters, this approach ensures that errors are minimized and corrected at every stage of the entanglement distribution process. As quantum networks grow in size and complexity, having a built-in error correction mechanism would be essential for scalability, ensuring that the system remains reliable as more nodes, applications, and users are added to the network. Real-time monitoring of entangled states would also allow the system to allocate network resources more efficiently, as it could preemptively route around regions where errors or noise are more likely to occur.

The quantum error detection module continuously tracks the integrity of entangled states. When errors, such as noise or decoherence, occur, the error correction module applies quantum error correction codes (such as Shor codes or Steane codes) to maintain the fidelity of the states. This module is managed via the SDN management layer, allowing the system to dynamically re-route quantum states or adjust storage to optimize entanglement distribution based on error rates detected in the network. By explicitly including quantum error correction within the EDaaS, the system becomes more robust and capable of supporting long-distance or complex quantum communication with fewer errors and ensuring high-fidelity quantum states.

Following, some functions of the EDaaS API are introduced:

### Get Logical Photon ID

The invention provides an API function, "Get Logical Photon ID", which enables an application to query the logical and physical identifiers of entangled photon pairs stored across different network nodes in the quantum network. This function plays a critical role in efficiently managing and retrieving entangled quantum states distributed between the local node and a peer node, thus facilitating coordinated quantum operations, such as quantum communication or teleportation, between distant nodes.

The Get Logical Photon ID function accepts a Peer Node ID as a request parameter, which represents the identifier of the peer node where one of the entangled photons is stored. Upon querying the peer node, the function returns two key pieces of information:
The Logical Photon ID (LPID), which provides a logical abstraction of the entangled photon pair. This identifier allows the application to refer to and manage the entangled photons logically, regardless of their physical storage location across the nodes.

The Physical Photon ID (PPID), which refers to the photon stored in the quantum memory of the local node. This identifier specifies the physical location or properties of the photon in the local quantum storage system, enabling the application to interact directly with the entangled photon, for instance, for retrieval, measurement, or other quantum operations.

This API function simplifies the process of tracking and managing entangled states in a distributed quantum network. Instead of requiring detailed knowledge of the physical location and state of each photon, the application can query the LPID to ensure the logical pairing of the entangled photons between two nodes is maintained. This enables seamless implementation of quantum protocols where the correlation between entangled photons is critical for success, such as quantum key distribution (QKD), quantum teleportation, or superdense coding.

### Check the Existence of LPID

The invention also provides an API function, "Check the Existence of LPID", which allows applications to verify whether a photon corresponding to a specific Logical Photon ID (LPID) is currently stored in the local quantum storage. This function is crucial for confirming that entangled photon pairs are available and valid in the quantum storage, before initiating further quantum operations such as quantum communication or computational processes.

The Check the Existence of LPID function takes the LPID as a request parameter, which uniquely identifies the logical identifier of the photon in question. Upon receiving the request, the system checks whether the photon associated with the given LPID is present in the local node's quantum storage. responds with a Boolean value: True indicates that the photon associated with the specified LPID is valid and currently stored in the local quantum memory. False indicates that no photon with the specified LPID is stored, or that the photon may have been lost or corrupted.

This API function is particularly valuable in distributed quantum systems where entangled states are transferred or stored across multiple nodes. By enabling applications to verify the presence of a specific photon in the local quantum storage, the system ensures that quantum operations such as quantum key distribution (QKD) or quantum teleportation can proceed only when the required quantum states are valid and available.

When an application initiates the Check the Existence of LPID function, it sends a request containing the LPID. Upon receiving the request, the system searches its local quantum storage for a photon associated with the given Logical Photon ID. The system then verifies the validity and existence of the photon and returns a response indicating whether the photon is present.

If the response is True, it confirms that the photon is stored in the local quantum memory, allowing the application to proceed with operations that depend on the photon's availability. Conversely, if the response is False, it indicates that the photon does not exist in the local storage. In this case, further actions involving this photon, such as quantum communication or processing, cannot be performed unless the entangled state is re-established.

This API function is especially useful for maintaining the integrity of entanglement-based applications, as it enables real-time validation of the entangled quantum states stored in the local node. Applications can rely on this function to ensure the quantum resources are available before initiating operations that rely on the entangled photon pairs, reducing the risk of failure during critical quantum communication or computation tasks.

The Check the Existence of LPID function enables real-time validation to determine whether a photon associated with a given Logical Photon ID (LPID) is stored in the local quantum memory. This ensures that applications can verify the availability of the required entangled states before proceeding with quantum operations, thereby improving the overall reliability of the system. By allowing applications to check the existence of photons in local quantum storage, the system ensures that entanglement integrity is maintained across distributed quantum networks. This is particularly important in scenarios where quantum states may degrade or be lost due to noise or other factors. The ability to check the LPID reduces the risk of errors during quantum protocols, as applications can confirm the presence of valid photons beforehand. The function prevents unnecessary operations by ensuring that applications only attempt quantum processes (such as quantum teleportation or quantum key exchange) when the required photon is available. This reduces wasted computational and network resources by allowing the application to take alternative steps if the photon is not found, thereby improving the overall efficiency of the system. The function prevents unnecessary operations by ensuring that applications only attempt quantum processes (such as quantum teleportation or quantum key exchange) when the required photon is available. This reduces wasted computational and network resources by allowing the application to take alternative steps if the photon is not found, thereby improving the overall efficiency of the system. If the function returns False, indicating the photon does not exist, the system can trigger error handling mechanisms or attempt to reestablish the entangled photon pair, ensuring that applications can adapt to the absence of the required quantum state.

### Get Status

The invention further provides an additional API function, "Get Status", which enables applications to retrieve a status overview of the entangled photons currently stored in the local quantum storage. Specifically, this function returns the number of entangled photons associated with each peer node in the network. By providing a comprehensive list of the entangled photon pairs and their corresponding peer nodes, this function offers an efficient way for applications to monitor the availability of entangled states and manage quantum operations accordingly.

The Get Status function does not require any request parameters and responds with a list that shows the number of entangled photon pairs stored in the local quantum memory, categorized by each peer node. For every peer node in the network, the response includes the number of entangled photons currently stored in the quantum storage for that specific peer node.

This function is essential for maintaining awareness of the entanglement resources available in the quantum network. Applications can use this status overview to optimize their quantum operations, ensuring that they are aware of the current quantum states and can plan their tasks based on the availability of entangled photon pairs between the local node and other peer nodes.

When an application invokes the Get Status function, it queries the local quantum storage for a list of all entangled photon pairs stored and maintained in relation to other peer nodes in the network. The function returns a status report that includes the number of entangled photons linked to each peer node. This status information allows the application to keep track of the entangled quantum states available for immediate use.

The Get Status function is particularly useful for managing the distribution and use of entangled states in large quantum networks, where multiple photon pairs may be shared between various nodes. By retrieving a real-time count of entangled photons across peer nodes, applications gain insights into the current quantum resources, enabling better coordination for quantum communication protocols such as quantum key distribution (QKD) or quantum teleportation.

The Get Status function provides a real-time snapshot of the number of entangled photons available in the local quantum storage for each peer node. This enables applications to keep track of the current quantum resources, ensuring they have an updated view of entanglement availability before initiating quantum operations. By returning the number of entangled photons per peer node, the function helps applications manage and allocate quantum resources more efficiently. The function allows for proactive planning, as applications can decide which quantum tasks to prioritize based on the availability of entangled photon pairs with specific peer nodes. This can be particularly useful in scenarios where some quantum links may be more resource-constrained than others. The status overview helps ensure that quantum communication or computational tasks are coordinated with the actual availability of entangled states. This prevents situations where an application attempts to initiate a quantum operation without sufficient entanglement resources, which could lead to delays or failures in the quantum protocol. The Get Status function supports the management of large-scale quantum networks, where multiple peer nodes and entangled photon pairs are involved. It allows the system to scale efficiently by providing a consolidated view of available quantum resources, enabling better management of complex quantum operations across different nodes in the network. By continuously monitoring the status of the quantum storage, applications can identify when resources are low or when more entangled states need to be generated. This reduces the risk of downtime in quantum communications or computations by allowing the system to maintain a steady supply of entangled photons.

### Trigger the Release of Physical Photon by LPID

The API function, "Trigger the Release of Physical Photon by LPID", which allows an application to trigger the release of a physical photon stored in the quantum storage system at a specific time. This function is crucial to ensure that the physical photon, associated with a particular Logical Photon ID (LPID), is released at the exact moment required for time-sensitive quantum operations such as Quantum Key Distribution (QKD) or Quantum Teleportation.

The Trigger the Release of Physical Photon by LPID function accepts two request parameters: LPID: This is the logical photon ID of the photon to be released. It refers to the physical photon stored in the local quantum storage system that the application is triggering for release. Timestamp: This defines the specific time at which the photon release should occur. The timestamp ensures that the photon release is synchronized with other quantum operations in the network, which is critical in distributed quantum processes.

As response parameters, the function returns a True/False value: True indicates that the release of the physical photon has been successfully triggered at the specified timestamp. False indicates that the release was not successful, potentially due to synchronization issues, an invalid LPID, or errors in the quantum storage system.

When an application initiates the Trigger the Release of Physical Photon by LPID function, it sends the LPID of the photon to be released and the timestamp at which the release should occur. The quantum storage system checks the timestamp and synchronizes the release of the physical photon accordingly. This synchronization is essential for time-critical quantum protocols, as the exact release of the photon directly impacts the success of quantum operations based on entanglement.

If the photon is successfully released, the system returns True, indicating that the photon release occurred as planned. If the release fails, the system returns False, and the application can trigger error handling routines to address the issue or attempt a new release.

This function allows applications to control the exact timing of the release of a physical photon, which is especially important for distributed quantum operations where multiple photons must be synchronized and released in perfect timing to ensure successful outcomes.

The ability to trigger the release of a physical photon at a specified timestamp ensures that all quantum operations can be executed with precise synchronization. This is particularly important in distributed quantum communication protocols such as Quantum Key Distribution (QKD), where accurate timing is essential to maintain the integrity of entanglement-based communication. By linking the release to the LPID, the function gives applications precise control over which specific photon is released from the quantum storage. This ensures that the correct entangled photon is released, which is crucial for the success of quantum operations that rely on this particular photon. If the photon release fails for any reason, the function returns False, allowing the application to immediately trigger appropriate error handling routines. This improves the reliability of the system by ensuring that potential issues are detected and addressed promptly. The function enables efficient execution of distributed quantum operations, ensuring that photons are released at the exact time required. This capability enhances the efficiency and success rate of complex quantum operations that occur across large quantum networks.

### Get Timestamp

The "Get Timestamp" API function allows an application to retrieve the current timestamp from the Entanglement Distribution as a Service (EDaaS) system. This function is essential for ensuring the time synchronization of application systems relative to the EDaaS service. Precise time synchronization is critical for distributed quantum applications, such as quantum key distribution (QKD) and quantum teleportation, where operations must be precisely aligned in time to maintain the integrity of quantum entanglement and optimize overall system performance.

The Get Timestamp function accepts the My Node ID as a request parameter, which identifies the node requesting synchronization. In response, the function returns the timestamp from the EDaaS system, representing the current time according to the centralized EDaaS clock, which serves as the reference for synchronizing other nodes or application systems.

This function enables applications to synchronize their operations with the EDaaS clock, ensuring that all quantum processes are conducted in a synchronized manner across the distributed network, thereby minimizing timing errors that could disrupt quantum protocols.

When an application invokes the Get Timestamp function, it sends the My Node ID as the request parameter, identifying the node from which the synchronization request originates. The EDaaS service processes this request and returns the current timestamp according to the centralized clock. The application can then use this timestamp to synchronize its internal clock, aligning it with the rest of the network and the EDaaS service.

By synchronizing with the EDaaS clock, the application ensures that any time-dependent quantum operations, such as the triggering of quantum state releases or the coordination of entangled photon usage, occur at the correct moments relative to the entire network. This centralized time reference is crucial for maintaining the accuracy and reliability of operations that depend on precise time intervals, such as quantum communication protocols.

The Get Timestamp function enables precise synchronization of application systems relative to the EDaaS service. This ensures that quantum operations across the network are synchronized with a centralized clock, reducing timing discrepancies that could interfere with quantum protocols. By synchronizing with the EDaaS service's clock, the function ensures that distributed quantum processes, such as quantum key distribution or quantum state teleportation, can be conducted in a highly coordinated manner. This helps maintain the integrity of quantum entanglement and ensures that time-sensitive operations are executed with minimal error. The function supports real-time synchronization across different nodes, which is particularly important in distributed quantum networks where operations depend on precise timing. By keeping all nodes and applications synchronized, the system improves the overall reliability and stability of quantum operations. The ability to retrieve a timestamp from the EDaaS service allows distributed applications to maintain consistent timing across geographically separated nodes. This enhances the scalability of the quantum network, enabling applications to operate reliably even in large-scale or long-distance quantum systems.

Next, the Q-Push function "Transmit Entangled Photonic State to Application's Setup" is introduced as a quantum control command that manages the physical release of photons in synchronization with the application's quantum setup. While high-level application commands can trigger the release of photons, it is understood that low-level quantum hardware manages the real-time execution of these operations.

This Q-Push function initiates the real-time transmission of a physical photon from the quantum memory system to the application's setup at a specified timestamp. The function ensures that the entangled photonic state is delivered precisely when needed for quantum operations, supporting time-sensitive quantum protocols such as quantum key distribution (QKD) or quantum teleportation.

This control command is executed within the quantum memory system, with the application providing two key inputs: Physical Photon ID (PPID): Identifies the exact photon stored in the quantum memory system to be released. Timestamp: Specifies the precise time at which the photon should be released to the application's setup.

Upon execution, the quantum control system manages the precise physical release of the photon, ensuring that it is transmitted to the target application's quantum setup in synchronization with the specified timestamp.
- Fig. 1: Overall System Architecture
- Fig. 2: Implementation of BBM92 QKD Using EDaaS platform
- Fig. 3: A step-by-step sequence of QKD process
- Fig. 4: The shared key retrieval process to establish AES-encrypted secure communication
- Fig. 5: The quantum teleportation process using the EdaaS
- Fig. 6: The flow of the quantum teleportation process
- Fig. 7.: Quantum teleportation physical setup
- Fig. 8.: The superdense coding process using the EDaaS
- Fig. 9: The flow of the quantum superdense coding process
- Fig. 10.: Quantum superdense coding physical setup
- Fig. 11.: The quantum time synchronization process using the EDaaS

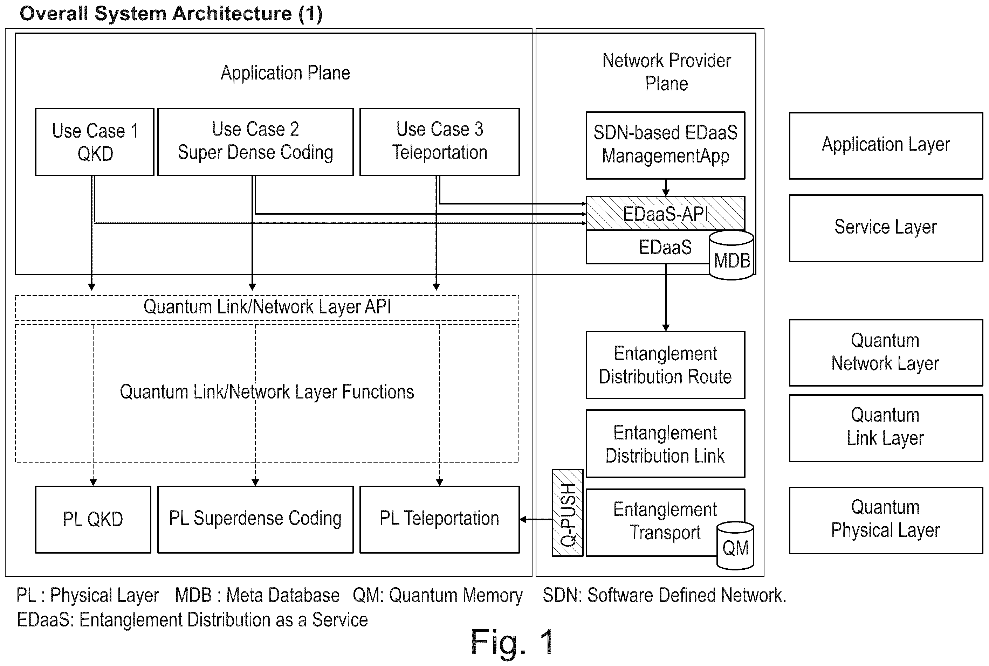

Figure 1 illustrates the overall system architecture for the Entanglement Distribution-as-a-Service (EDaaS) platform, which supports various quantum applications through the efficient management of entangled quantum states. The architecture is divided into several layers and planes, which work together to enable quantum communication, quantum computing, and entanglement-based services. The system is composed of two primary planes: the Application Plane and the Network Provider Plane, which are connected through APIs and quantum functions.

The Application Plane hosts various quantum applications that consume entangled quantum states provided by the EDaaS platform. Three use cases are shown in the figure:
▪ Quantum Key Distribution (QKD): This application utilizes entangled quantum states for secure communication. QKD protocols, such as BBM92 and E91, are implemented to generate cryptographic keys shared securely between two parties.
▪ Superdense Coding: This quantum communication protocol leverages entanglement to transmit more information than is possible with classical bits. By encoding two bits of classical information into one quantum bit (qubit), superdense coding increases the efficiency of data transmission.
▪ Quantum Teleportation: This protocol allows for the transfer of a quantum state from one location to another without physically transmitting the particle itself. Teleportation relies on entangled states to transmit quantum information instantaneously between two nodes.

Each of these quantum applications interacts with the EDaaS API to access the underlying quantum entanglement resources managed by the Network Provider Plane.

The Network Provider Plane manages the generation, distribution, and synchronization of entangled quantum states. It consists of multiple components that handle the routing, transporting, and managing of entanglement across the quantum network. Key components include:
SDN-based EDaaS Management Application: This Software Defined Network (SDN)-based application is responsible for managing the overall configuration of the EDaaS platform. It dynamically allocates resources, monitors network performance, and manages quantum channels.
EDaaS API: This API acts as the interface between the Application Plane and the quantum infrastructure provided by the Network Provider Plane. The API allows applications like QKD, superdense coding, and teleportation to request entangled states, query the quantum network, and trigger the release of photons using commands like Q-Push.
Entanglement Distribution Functions: These functions are critical for managing the distribution of entangled photon pairs between different nodes in the quantum network. The figure breaks down these functions into:
   - Entanglement Distribution Route: This component is responsible for routing the entangled quantum states across the network. It selects optimal paths between nodes, ensuring efficient transmission of entangled states.
   - Entanglement Distribution Link: This refers to the quantum communication links established between different nodes in the network to facilitate the transmission of entangled states.
   - Entanglement Transport: This function handles the physical transmission of the entangled states between nodes, ensuring the integrity and stability of the quantum states during transport. It likely interacts with components like quantum repeaters to extend the range of entanglement.
Meta Database (MDB): The MDB stores metadata related to the entanglement distribution process, including information about the entangled pairs, their routing paths, and their logical and physical photon IDs (LPIDs and PPIDs). This database ensures that the system can track the state and location of all entangled pairs within the network.
Quantum Memory (QM): The quantum memory stores the physical qubits (photons) that are part of the entangled pairs. The Q-Push function interacts with the quantum memory to release the stored entangled photons to the application layer at the required time.

The Quantum Link/Network Layer API serves as the interface between the Application Plane and the Quantum Link/Network Layer. The Quantum Link/Network Layer handles the lower-level operations required for transmitting entangled photons between nodes and ensuring that the photons are correctly routed and stored in quantum memories.

The Quantum Link/Network Layer API allows applications in the Application Plane to access the necessary quantum infrastructure in the Physical Layer. It provides access to functions responsible for handling:
- Physical Layer QKD (PL QKD): Supports the quantum operations needed for QKD protocols.
- Physical Layer Superdense Coding (PL Superdense Coding): Supports the encoding and decoding operations needed for superdense coding.
- Physical Layer Teleportation (PL Teleportation): Supports the quantum operations needed for quantum teleportation, including the management of entangled states and teleportation of quantum information.

The architecture shows how the Application Plane interacts with the underlying Quantum Network through APIs and control commands. Applications that rely on entangled states, such as QKD, superdense coding, or teleportation, interact with the EDaaS platform through the EDaaS API. The quantum infrastructure is managed by the Network Provider Plane, which routes, links, and distributes the entangled states, ensuring that they are available for the applications when needed.
- The Quantum Network Layer handles the end-to-end transmission of entangled states between nodes, ensuring reliable and synchronized delivery of quantum information across the network.
- The Physical Layer (PL) is responsible for the actual generation, storage, and transmission of entangled photons and ensures that these photons are transmitted securely through the quantum network.

This system architecture illustrates a multi-layered approach to managing quantum resources and applications. The EDaaS platform provides the underlying infrastructure for entanglement distribution, allowing applications such as QKD, superdense coding, and teleportation to request and use entangled quantum states efficiently. By leveraging SDN-based management, quantum memory, and APIs, the system ensures that applications have real-time access to entangled states, supporting secure and reliable quantum communication and computing protocols.

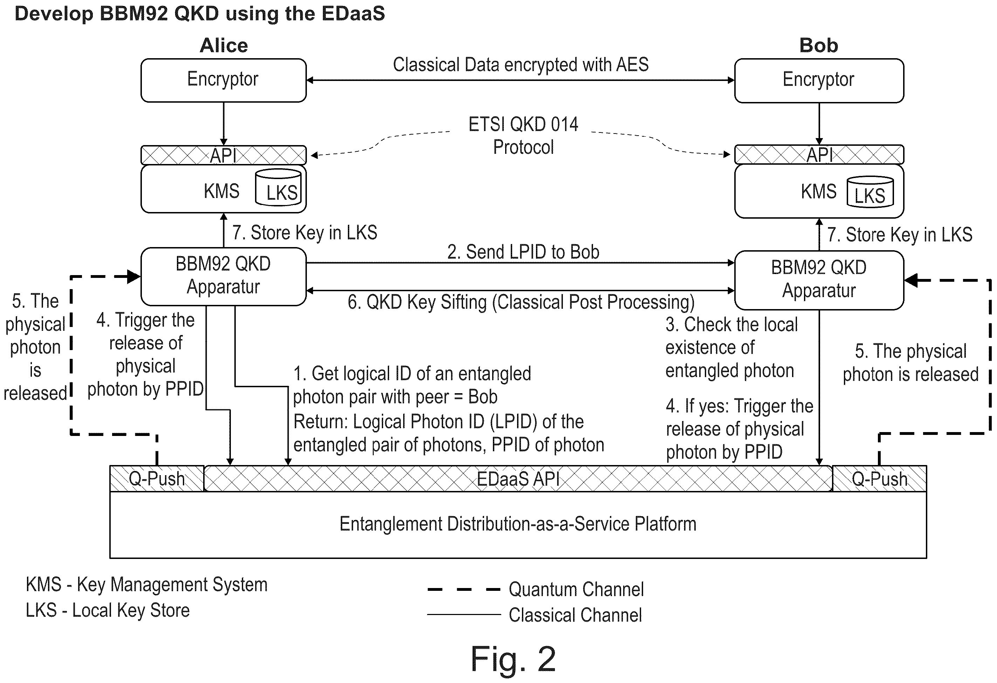

In the example disclosed in Figure 2, the BBM92 Quantum Key Distribution (QKD) protocol is implemented using the Entanglement Distribution-as-a-Service (EDaaS) platform to generate and distribute entangled photon pairs between two parties, Alice and Bob, for the secure exchange of cryptographic keys. The following steps describe how the QKD process can be developed using the EDaaS platform, leveraging both quantum and classical channels.

Step 1: Alice's BBM92 QKD Apparatus initiates the process by querying the EDaaS API to retrieve the Logical Photon ID (LPID) of an entangled photon pair shared with Bob. This API function is invoked to identify the entangled photon pair, returning both the LPID of the photon pair and the Physical Photon ID (PPID) of the photon stored in EDaaS's quantum memory.

Using the Get Logical Photon ID function, the EDaaS platform identifies the entangled photons and assigns the necessary IDs to Alice, enabling her QKD apparatus to reference, retrieve and process the photon locally.

Step 2: Alice's BBM92 QKD Apparatus sends the retrieved LPID to Bob's QKD apparatus via a classical communication channel. This exchange informs Bob's system of the entangled photon pair being used for the key generation process, allowing both systems to synchronize their quantum operations.

Step 3: Upon receiving the LPID, Bob's BBM92 QKD Apparatus queries EDaaS's quantum memory to verify whether the corresponding photon from the entangled pair is stored and valid. Using the Check Existence of LPID API function, Bob's system ensures that the required photon is available before proceeding.

Steps 4: After validating the photon, both Alice and Bob trigger the release of their respective photons from EDaaS's quantum memory using the Trigger the Release of Physical Photon by PPID function. This API command ensures that each photon is released at the correct time for synchronized processing.

Steps 5: The Q-Push function is employed to ensure the physical release of the entangled photons from EDaaS's quantum storage systems to their respective quantum setups. This process occurs at a specific timestamp to guarantee that both photons are released and measured in perfect synchronization. The Q-Push control command manages the real-time release of the entangled photons, ensuring that they are ready for use in the QKD process, where precise timing is essential for maintaining entanglement and producing correlated measurements.

Step 6: Once both entangled photons have been released and measured by Alice and Bob, they perform quantum key sifting using classical post-processing over the classical channel. This step involves comparing their measurement results to eliminate any mismatches, ultimately producing a shared, secure cryptographic key. This classical key sifting process ensures that the final shared key is secure, as any external interference or eavesdropping would have disturbed the entanglement, introducing detectable inconsistencies in the measurements.

After completing the QKD process, both Alice and Bob store the generated cryptographic key in their respective Key Management Systems (KMS). These keys are securely stored in the Local Key Store (LKS), making them readily available for future encryption and decryption tasks. The KMS provides secure key management and integrates seamlessly with encryption systems to support future secure communication.

In this example, the EDaaS platform enables efficient and synchronized distribution of entangled photons across quantum channels. It achieves this by assigning logical and physical identifiers to the entangled photon pairs, managing the real-time release via the Q-Push function, and supporting classical post-processing for key sifting. These capabilities allow the EDaaS platform to facilitate the generation of secure cryptographic keys using the BBM92 QKD protocol.

In a second implementation, Alice and Bob utilize the BBM92 QKD protocol implemented via the Entanglement Distribution-as-a-Service (EDaaS) platform to generate a shared cryptographic key. The process uses entangled photon pairs distributed by the EDaaS platform and relies on precise synchronization of quantum and classical operations to ensure a secure key.

Referring to Fig. 2, additionally the following scenario is conceivable: Alice and Bob establish a secure communication channel using the BBM92 QKD protocol implemented via the EDaaS platform. The goal is to generate a shared cryptographic key that both parties can use to encrypt and decrypt messages.

Step 1: Alice's BBM92 QKD Apparatus communicates with the EDaaS API to initiate the distribution of entangled photon pairs. Using the Get Logical Photon ID (LPID) function, Alice's system queries the EDaaS platform to retrieve the LPID of an entangled photon pair that will be shared with Bob. The Logical Photon ID and the Physical Photon ID (PPID) of Alice's photon are returned. Alice's QKD apparatus stores these identifiers for photon management during the QKD process.

Step 2: Alice then transmits the LPID to Bob's QKD apparatus over a classical communication channel, enabling both parties to reference the same entangled photon pair.

Step 3: Bob's BBM92 QKD Apparatus uses the LPID to check whether the corresponding photon from the entangled pair is present in EDaaS's quantum memory. This is done using the Check Existence of LPID function.

Steps 4: Once the photon is validated, both Alice and Bob trigger the release of their respective photons using the Trigger the Release of Physical Photon by PPID function. The release is precisely synchronized using a specified timestamp, ensuring that both entangled photons are processed simultaneously within their respective quantum setups.

Steps 5: The Q-Push command manages the real-time transmission of the physical photons from EDaaS's quantum memories to their quantum setups. The photons are released at the designated timestamp to ensure perfect synchronization between the two systems. This precise synchronization is critical for maintaining the entanglement between the photons, allowing Alice and Bob to measure their quantum states in a correlated manner.

Step 6: After measuring their respective entangled photons, Alice and Bob perform classical post-processing to compare their results in a process known as key sifting. Through a classical communication channel, they identify and discard any measurement results that are not correlated, ultimately producing a shared cryptographic key. The key sifting process enhances security by ensuring that any interference or eavesdropping during the quantum communication - which would disturb the entangled states and create mismatched measurements - is detected and eliminated.

Steps 7: Once the shared key has been successfully generated, both Alice and Bob securely store their respective keys in their Key Management Systems (KMS). Each party stores their key in their Local Key Store (LKS) for future cryptographic operations. The KMS ensures that the keys are properly managed and securely stored, allowing Alice and Bob to use these keys for secure communication in the future.

In this example, the BBM92 QKD protocol generates a secure cryptographic key by leveraging the entanglement distribution capabilities of the EDaaS platform. By using API functions such as Get Logical Photon ID, Check Existence of LPID, and Q-Push, Alice and Bob synchronize the release of entangled photons, measure their states, and perform key sifting through classical post-processing. The generated keys are then securely stored in their respective local key stores.

In contrast to the first example above, this example is a more concise version, focused strictly on the key generation and storage aspect of the QKD process, as illustrated in the figure 2. It follows the same basic steps of using the EDaaS platform but omits extended scenarios, such as encrypted communication or message handling. This example emphasizes how Alice and Bob use the entangled photons to perform key sifting and securely store the generated cryptographic key in their respective Key Management Systems (KMS). This streamlined example highlights photon synchronization, key generation, and secure storage, in accordance with the figure 2.

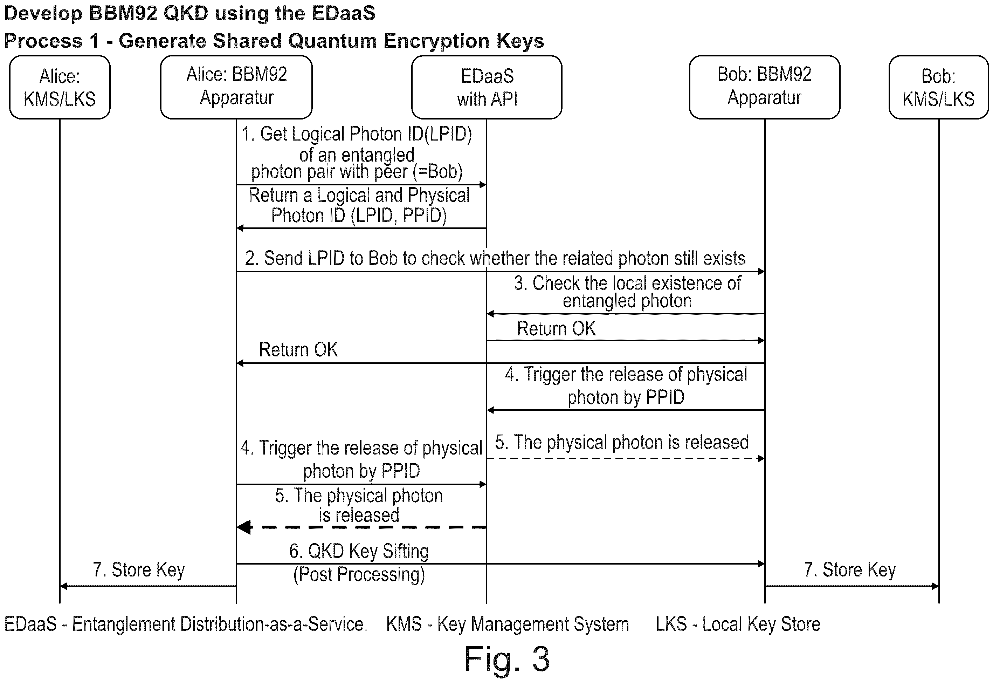

Figur 3 outlines a step-by-step sequence that involves the interaction between Alice's BBM92 QKD Apparatus, Bob's BBM92 QKD Apparatus, the EDaaS platform (via API), and the Key Management Systems (KMS) and Local Key Store (LKS) of both Alice and Bob.
- Get Logical Photon ID (Step 1): Alice's BBM92 QKD Apparatus queries the EDaaS API to obtain the Logical Photon ID (LPID) and the Physical Photon ID (PPID) of the entangled photon pair shared with Bob. The EDaaS platform returns the LPID and PPID to Alice.
- Send LPID to Bob (Step 2): Alice sends the LPID to Bob via a classical communication channel. Bob uses the LPID to reference the same entangled photon pair and check its status.
- Check Local Existence of Entangled Photon (Step 3): Bob's BBM92 QKD Apparatus checks EDaaS's quantum memory to verify if the photon corresponding to the LPID is still available and valid. This check is performed using the Check Existence of LPID API function. Upon finding the photon, Bob's system sends an "OK" response back to Alice, confirming the existence of the entangled photon.
- Trigger the Release of the Photon (Step 4): Both Alice and Bob trigger the release of their respective entangled photons using the Trigger the Release of Physical Photon by PPID API function, specifying the Physical Photon ID (PPID).
- Photon Release (Step 5): The physical photons are released from quantum storage and transmitted via the quantum channel (blue dashed line). The entangled photons are now available for measurement at Alice's and Bob's quantum setups.
- QKD Key Sifting (Step 6): Once Alice and Bob have measured their respective photons, they perform key sifting using classical post-processing. This process involves comparing their measurement results to identify and discard any mismatches, resulting in the generation of a secure shared key.
- Store the Key (Step 7): The shared key generated from the QKD process is securely stored in both Alice's and Bob's Local Key Stores (LKS), which are managed by their respective Key Management Systems (KMS). The key is now ready for use in future encryption and decryption tasks.

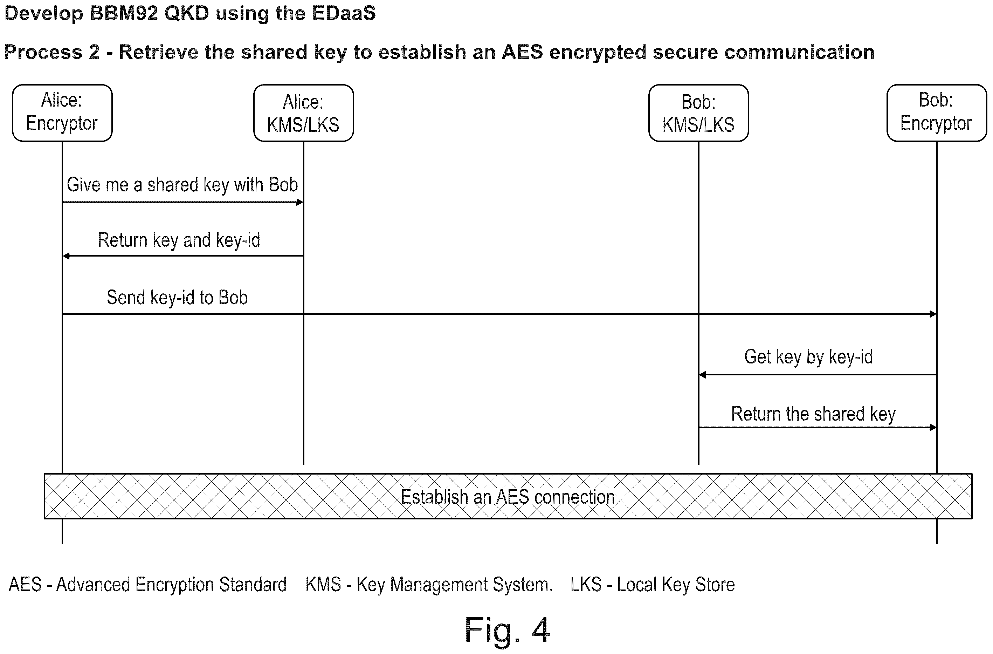

The process illustrated in Figure 4 outlines how Alice and Bob retrieve their shared quantum key, which was previously generated using the BBM92 QKD protocol, and use it to establish an AES-encrypted secure communication channel. The process focuses on the interaction between their Key Management Systems (KMS) and their encryption applications, using a shared key that was generated and stored during the QKD process. Following is a step-by-step description of this procedure:
- Step 1: Alice's Encryptor initiates the process by sending a request to Alice's Key Management System (KMS), asking for a shared key that she has with Bob. This request is necessary to retrieve the previously generated quantum key from the local key store (LKS), which will be used for AES encryption.
- Step 2: Alice's KMS processes the request and retrieves the shared key along with its associated Key-ID from Alice's Local Key Store (LKS), and returns both the shared key and the Key-ID to Alice's Encryptor. The Key-ID is an identifier used to uniquely identify the shared key.
- Step 3: Once Alice has received the Key-ID and the associated key, she transmits the Key-ID to Bob's Encryptor over a classical communication channel. This step allows Bob to use the same Key-ID to retrieve the corresponding shared key from his own KMS.
- Step 4: Upon receiving the Key-ID from Alice, Bob's Encryptor sends a request to Bob's KMS to retrieve the shared key associated with that Key-ID. Bob's KMS retrieves the corresponding key from Bob's Local Key Store (LKS) using the provided Key-ID.
- Step 5: Bob's KMS returns the shared key to Bob's Encryptor, ensuring that both Alice and Bob now have the same shared key available for encrypting and decrypting messages.
- Step 6: With the shared key retrieved and available to both Alice and Bob, they can now establish an AES-encrypted communication channel. Using AES (Advanced Encryption Standard), Alice can encrypt her messages with the shared key, and Bob can decrypt the messages using the same key, ensuring secure communication between the two parties.

The key components of the process shown in Figure 4 are the
- KMS (Key Management System): Both Alice and Bob use their KMS to manage and store cryptographic keys. The Local Key Store (LKS) holds the shared keys that were generated during the QKD process.
- Key-ID: This is a unique identifier for each key stored in the KMS. It ensures that both Alice and Bob can reference the same shared key when retrieving it from their respective KMS.
- AES Encryption: Once the shared key is retrieved, it is used for AES encryption, a widely-used symmetric encryption method, to secure communication between Alice and Bob.

The figure demonstrates how Alice and Bob retrieve their shared key via their respective KMS systems, using the Key-ID to reference the correct key. The shared key, which was previously generated via the BBM92 QKD process, is securely stored in both Alice's and Bob's Local Key Stores (LKS). By exchanging the Key-ID and retrieving the corresponding key from their KMS, Alice and Bob are able to establish a secure communication channel using AES encryption.

### Quantum Teleportation in Distributed Quantum Computing

Quantum teleportation is a fundamental protocol that enables the transfer of quantum states between two distant quantum systems. This protocol is particularly valuable for distributed quantum computing, where the integration of multiple quantum computers can exponentially increase the computational power of the system.

In a typical quantum computer, the number of quantum states that can be processed is represented as 2", where n is the number of qubits. For instance, two separate quantum computers with 50 qubits each can process 2×2⁵⁰ quantum states. However, if these two quantum computers are integrated using quantum teleportation, they effectively function as a single quantum system with 100 qubits, resulting in the ability to process 2¹⁰⁰ quantum states, a significant computational advantage.

Quantum teleportation allows the transfer of an arbitrary quantum state from a sender (commonly referred to as "Alice") to a receiver ("Bob") by leveraging entangled photon pairs that were previously distributed between them. The teleportation protocol does not involve the physical transfer of the qubit itself; instead, it relies on reconstructing the qubit's state at the receiver's location, effectively allowing the instantaneous transfer of quantum information over long distances.

Before teleportation begins, a pair of entangled photons is generated and distributed between Alice and Bob. Alice holds one photon from the entangled pair, and Bob holds the other. This distribution of entangled states is facilitated by the Entanglement Distribution-as-a-Service (EDaaS) platform, which ensures that both parties have access to their respective entangled photons.

Alice wishes to teleport a quantum state that she holds (denoted as |ψ〉) to Bob. To achieve this, she performs a Bell State Measurement (BSM) on her photon from the entangled pair and the qubit representing the state |ψ〉. The BSM effectively destroys both the quantum state |ψ〉 and Alice's photon, collapsing the quantum system into one of four possible Bell states. The result of the BSM is encoded in two classical bits, which Alice then transmits to Bob over a classical communication channel.

Upon receiving the two classical bits from Alice, Bob applies one of four possible quantum operations to his entangled photon, depending on the outcome of Alice's Bell State Measurement. These quantum operations are selected from the set {I,X,Y,Z}, which includes the identity operation and three Pauli operators. By applying the correct quantum operation, Bob is able to reconstruct the original quantum state |ψ〉 at his location. Importantly, this reconstructed quantum state is identical to the state that Alice originally held, even though no quantum information was directly transmitted through the classical channel.

In the context of distributed quantum computing, this teleportation protocol allows qubits to be transferred between different quantum computers. This capability allows physically separate quantum systems to be integrated, enabling the construction of larger quantum systems from distributed components. For example, by teleporting qubits between two quantum computers, each containing 50 qubits, the combined system behaves as a single quantum computer with 100 qubits, enabling the processing of 2¹⁰⁰ quantum states. This significant increase in computational power makes quantum teleportation a crucial protocol for scalable quantum computing.

Advantages of Quantum Teleportation:
- Instantaneous State Transfer: Quantum teleportation allows for the transfer of a quantum state across long distances without physically transmitting the qubit. The original state is destroyed at the sender's side and perfectly recreated at the receiver's side, ensuring secure transmission of quantum information.
- Integration of Distributed Quantum Systems: By enabling the transfer of qubits between different quantum computers, teleportation allows for the integration of distributed quantum computing resources. This leads to a superlinear scaling in the number of quantum states that can be processed, enabling the construction of larger quantum computers with significantly increased computational power.
- Efficient Use of Entanglement: The teleportation protocol relies on pre-shared entanglement, which is a key resource managed by the EDaaS platform. The system ensures that entangled photon pairs are available for teleportation and other quantum operations, thus supporting efficient and scalable distributed quantum systems.

Quantum teleportation is a vital protocol for unlocking the full potential of distributed quantum computing. By using entangled photon pairs, the protocol allows the instantaneous transfer of qubits between quantum computers, promoting the seamless integration of quantum systems and enabling the exponential scaling of computational resources. With the support of the EDaaS platform, teleportation ensures that qubits can be efficiently transferred and integrated across quantum networks, opening up new possibilities for the future of quantum computing.

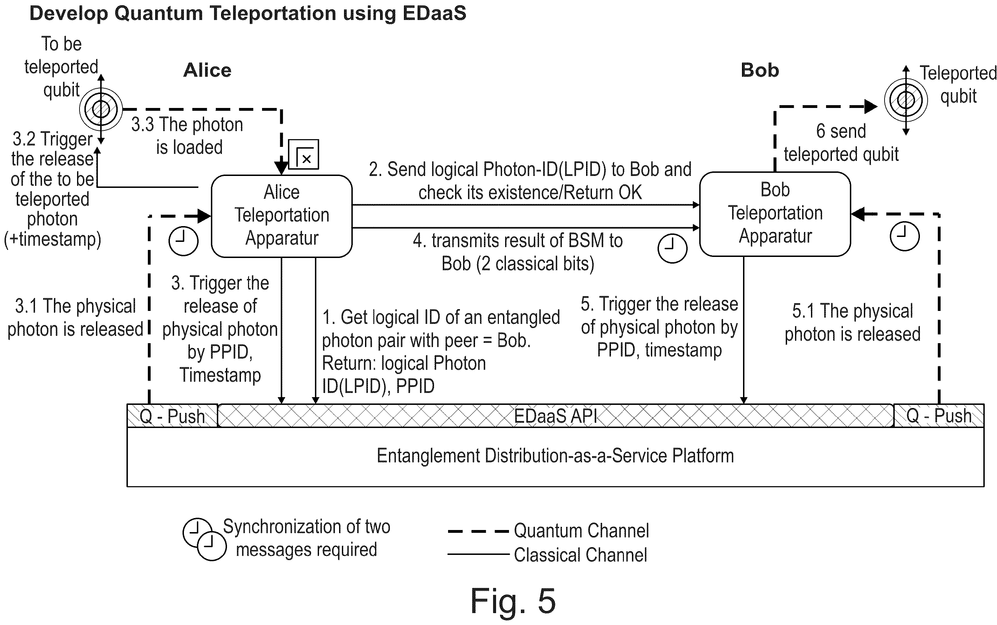

Figure 5 illustrates the process of Quantum Teleportation using the Entanglement Distribution-as-a-Service (EDaaS) platform. It outlines the steps taken to teleport a qubit from Alice to Bob, leveraging previously distributed entangled photons and using the Q-Push mechanism for photon release. This figure demonstrates the quantum teleportation process between Alice and Bob, showing how an arbitrary quantum state (qubit) is teleported from Alice's side to Bob's side using pre-distributed entangled photon pairs. The EDaaS platform plays a crucial role by managing the distribution and synchronization of the entangled photons and enabling the teleportation operation through its Q-Push functionality. The steps are:
- Step 1: Alice's Teleportation Apparatus initiates the process by querying the EDaaS API to retrieve the Logical Photon ID (LPID) and Physical Photon ID (PPID) of an entangled photon pair shared with Bob. The EDaaS platform returns the LPID (which identifies the entangled photon pair) and the PPID.
- Step 2: Alice sends the Logical Photon ID (LPID) to Bob's Teleportation Apparatus via a classical communication channel. Bob uses the LPID to check whether his corresponding entangled photon, stored in EDaaS's quantum memory, is still available. Bob confirms the photon's existence by sending an "OK" message back to Alice, verifying that the entangled pair is intact. After verifying the entangled photon, Alice and Bob prepare for teleportation by triggering the release of their respective physical photons.
- Step 3: Both Alice and Bob use the Trigger the Release of Physical Photon by PPID function via the EDaaS API, specifying the timestamp for synchronized release.
- Step 3.1: The physical photon is released from the quantum memory to Alice's Teleportation Apparatus using the Q-Push function. This allows Alice to conduct the Bell State Measurement (BSM).
- Step 3.2: Alice also triggers the release of the photon representing the "to-be-teleported" qubit, which subsequently interacts with the entangled photon during the Bell-State Measurement (BSM).
- Step 3.3: The "to-be-teleported" photon is loaded into Alice's teleportation apparatus, marking the completion of the preparation phase for the teleportation process.
- Step 4: Alice performs the Bell State Measurement (BSM) on the to-be-teleported qubit and her photon from the entangled photon pair. This measurement destroys both the original quantum state and the entangled photon, collapsing the quantum system into one of four Bell states. The result of the BSM is encoded in two classical bits, which Alice transmits to Bob via a classical communication channel.
- Step 5: Upon receiving the two classical bits from Alice, Bob triggers the release of his entangled photon from the quantum memory using the Q-Push function (Step 5.1). Based on the result of Alice's BSM, Bob applies one of four possible quantum operations to his entangled photon. By applying the correct quantum operation, Bob reconstructs the original quantum state (the "teleported" qubit) at his location.
- Step 6: After Bob applies the appropriate quantum operation to his photon, the teleported qubit is successfully reconstructed within Bob's Teleportation Apparatus. The quantum state that originally existed at Alice's location is now replicated at Bob's location, completing the quantum teleportation process.

The key components are:
- EDaaS Platform: The Entanglement Distribution-as-a-Service platform is responsible for managing the entanglement distribution, ensuring that Alice and Bob have access to their respective entangled photons. It also facilitates photon release through the Q-Push function.
- Q-Push Function: This is a critical component of the teleportation process. It enables the real-time release of physical photons from the quantum memory to the teleportation apparatuses at precisely synchronized times.
- Classical and Quantum Channels:
   Quantum Channel (dashed line): Used to distribute the entangled photons and teleport the quantum state.
   Classical Channel (solid line): Used to transmit classical information, such as the Logical Photon ID (LPID) and the two classical bits from the BSM result.
- Bell State Measurement (BSM): This is the quantum operation performed by Alice to collapse the entangled states. The result of the BSM is transmitted to Bob, enabling him to apply the correct quantum operation to reconstruct the original qubit.

The figure emphasizes the need for synchronization between Alice and Bob during the quantum teleportation process. Timing is crucial, as the release of photons and the transmission of classical information must occur in precise coordination to ensure successful teleportation.

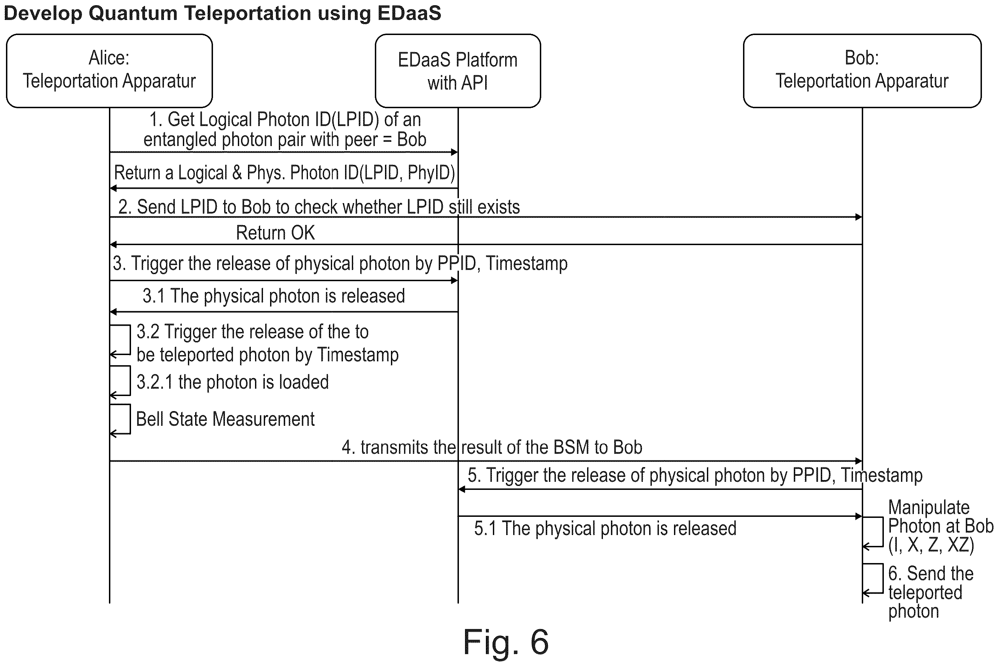

Figure 6 illustrates a detailed process of quantum teleportation utilizing the Entanglement Distribution-as-a-Service (EDaaS) platform. It demonstrates how a quantum state (qubit) is teleported from Alice to Bob, by leveraging previously distributed entangled photon pairs. This teleportation process integrates both quantum channels (for the distribution and manipulation of entangled photons) and classical communication channels (for transmitting measurement results). The EDaaS platform plays a central role in managing the generation, distribution, and synchronized release of entangled photons between Alice and Bob, enabling real-time teleportation of quantum states. The steps nvolved in this process are as follows:
- Step 1: Alice's Teleportation Apparatus initiates the teleportation process by querying the EDaaS API to retrieve the Logical Photon ID (LPID) and Physical Photon ID (PPID) of an entangled photon pair shared with Bob. The EDaaS platform responds with the LPID (identifying the entangled pair) and the PPID (representing Alice's photon stored in EDaaS's quantum memory).
- Step 2: Alice transmits the LPID to Bob's Teleportation Apparatus over a classical communication channel. Bob uses the LPID to check whether his corresponding entangled photon is still available in EDaaS's quantum memory. This verification step ensures the integrity of the entangled pair for teleportation. If the photon is available, Bob's system sends an "OK" confirmation back to Alice.
- Step 3: After verifying the existence of the entangled photons, both Alice and Bob prepare for the synchronized release of their respective entangled photons. Using the Trigger the Release of Physical Photon by PPID function via the EDaaS API, both Alice and Bob request the release of their entangled photons from the quantum memory. A timestamp is included in the request to ensure that the photons are released in perfect synchronization.
- Step 3.1: Alice's photon is released from the quantum memory into the Teleportation Apparatus, controlled in real time using the Q-Push function.
- Step 3.2: Concurrently, Alice triggers the release of the to-be-teleported qubit (the qubit whose state will be transferred) and loads it into the Teleportation Apparatus.
- Step 3.3: Both the entangled photon and the to-be-teleported qubit are now in Alice's teleportation setup, ready for the next stage of the teleportation process.
- Step 4: Alice performs a Bell State Measurement (BSM) on the to-be-teleported qubit and her entangled photon. The BSM collapses the quantum states of both qubits, effectively destroying them, and results in one of four possible Bell states. The outcome of the BSM is represented by two classical bits, which Alice then transmits to Bob via the classical communication channel.
- Step 5: Upon receiving the two classical bits from Alice, Bob triggers the release of his corresponding entangled photon using the Q-Push function via the EDaaS API.
- Step 5.1: Bob's photon is released from the quantum memory into his Teleportation Apparatus.
- Based on the outcome of Alice's BSM (transmitted as two classical bits), Bob applies one of four possible quantum operations to his entangled photon. These operations correspond to the identity operator (I) and the Pauli operators (X, Y, Z). The specific operation is determined by the BSM result, ensuring that Bob's photon is transformed into a replica of the original quantum state that Alice wanted to teleport.
- Step 6: Once Bob applies the correct quantum operation, the quantum state that Alice initially held is now reconstructed in Bob's Teleportation Apparatus. This completes the quantum teleportation process, where the qubit, originally located on Alice's side, is now perfectly replicated at Bob's side, without the need for physical transmission of the qubit.

Figure 6 illustrates the complete flow of the quantum teleportation process between Alice and Bob, managed by the EDaaS platform. The process involves the distribution of entangled photon pairs between Alice and Bob, the performing of a Bell State Measurement (BSM) by Alice, and the reconstruction of the teleported quantum state at Bob's location based on classical information. The Q-Push function plays a crucial role by ensuring the real-time, synchronized release of photons from quantum memory, enabling the seamless teleportation of quantum information.

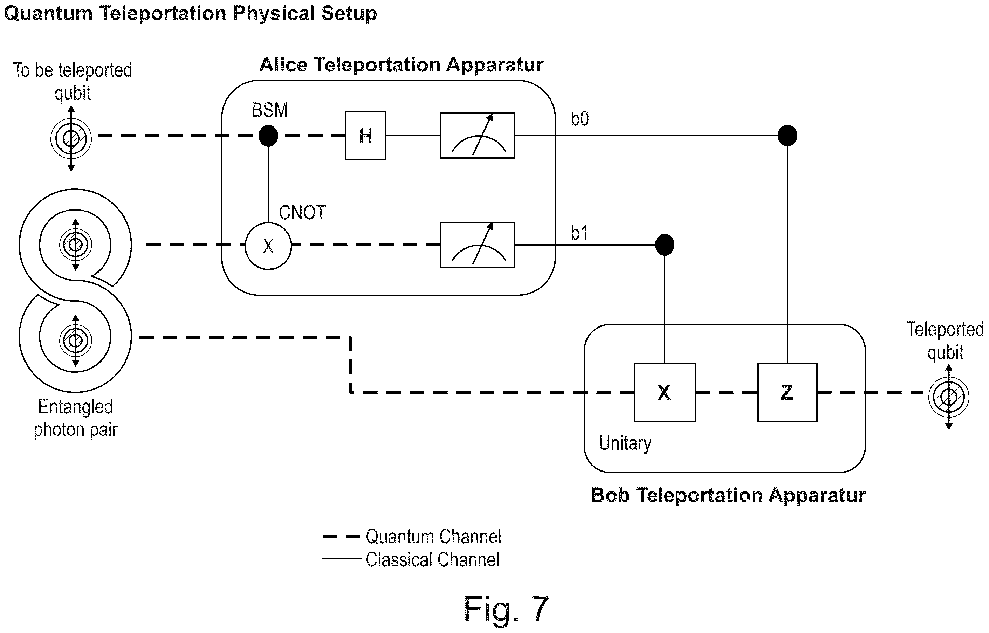

Figure 7 presents the physical setup required to implement the quantum teleportation protocol between two parties: Alice (the sender) and Bob (the receiver). It demonstrates how the to-be-teleported qubit is transferred from Alice to Bob using entangled photon pairs and classical communication. The process involves quantum gates and Bell State Measurement (BSM) on Alice's side and unitary operations on Bob's side to recreate the teleported quantum state.

The teleportation protocol begins with Alice and Bob sharing an entangled photon pair. This pair is generated and distributed prior to the teleportation process. Alice holds one of the entangled photons, while Bob holds the other. The entangled state between the photons provides the quantum resource necessary for teleportation.

Alice possesses the quantum state (qubit) that is to be teleported. This is the to-be-teleported qubit, shown in the top left of the figure 7.

Alice's first step is to perform a CNOT (Controlled-NOT) gate operation between the to-be-teleported qubit and her photon from the entangled photon pair. The CNOT gate entangles the state of the to-be-teleported qubit with her entangled photon.

After applying the CNOT gate, Alice then applies a Hadamard gate (H) to the to-be-teleported qubit. The Hadamard gate transforms the qubit into an equal superposition of its basis states, which is essential for performing the Bell State Measurement (BSM).

Next, Alice performs a Bell State Measurement on the to-be-teleported qubit and her entangled photon (from the entangled pair shared with Bob). This measurement collapses both qubits into one of four Bell states. The result of the BSM is represented by two classical bits, denoted as b0 and b1, which correspond to the outcome of the measurement.

Alice transmits the result of her Bell State Measurement (b0 and b1) to Bob via a classical communication channel. These two classical bits are essential for Bob to reconstruct the teleported quantum state on his side.

Upon receiving the two classical bits (b0 and b1) from Alice, Bob performs a series of quantum operations (also known as unitary operations) on his photon from the entangled pair. The unitary operations that Bob applies depend on the values of the classical bits (b0 and b1) sent by Alice:
▪ If b0=1, Bob applies the X gate (Pauli-X operation), which flips the qubit.
▪ If b1 =1, Bob applies the Z gate (Pauli-Z operation), which introduces a phase flip.

These operations ensure that Bob's photon is transformed into the exact replica of the quantum state that Alice intended to teleport.

After applying the correct X and Z operations based on Alice's measurement results, Bob successfully recreates the original quantum state. This state, which was originally located on Alice's side, is now fully reconstructed at Bob's location. The teleported qubit is now available for further quantum operations or computations in Bob's system.

The Key Components of the Physical Setup are:
Quantum Gates:
   - CNOT Gate: Used to entangle the to-be-teleported qubit with Alice's photon.
   - Hadamard Gate (H): Applied to the to-be-teleported qubit to place it in superposition before the Bell State Measurement.
   - X and Z Gates: These are the Pauli operators applied by Bob based on the classical bits sent by Alice, allowing him to reconstruct the teleported state.
Entangled Photon Pair:
   - The pre-shared entanglement between Alice and Bob's photons is the core resource enabling the teleportation process. The entangled state provides the correlation necessary for Bob to recreate the quantum state after receiving Alice's classical measurement results.
Bell State Measurement (BSM):
   - Alice's BSM on the to-be-teleported qubit and her entangled photon is a key step in teleportation. The outcome of the BSM, encoded as two classical bits, guides Bob's quantum operations.
Classical Communication Channel:
   - While the quantum state itself is not transmitted, Alice must communicate the results of her Bell State Measurement to Bob via a classical channel. This information is necessary for Bob to apply the correct quantum operations to his photon.

### Quantum Superdense Coding (SDC) in Communication

In classical information theory, the maximum rate at which information can be reliably transmitted over a communication channel is limited by the Shannon channel capacity. This represents the theoretical upper bound on the amount of classical information that can be transmitted over a given channel, based on the signal-to-noise ratio and other factors. However, in the context of quantum communication, this classical limitation can be overcome using quantum-based protocols, such as Superdense Coding (SDC).

Superdense Coding (SDC) is a powerful quantum communication protocol that leverages the properties of entangled photons to transmit classical information more efficiently than classical methods. By using entanglement, SDC enables the transmission of two classical bits of information using just one qubit (one of the entangled photons). This effectively allows for communication that is effectively twice as fast as traditional classical communication over an optical channel, making it highly advantageous for bandwidth-constrained or high-speed communication systems.

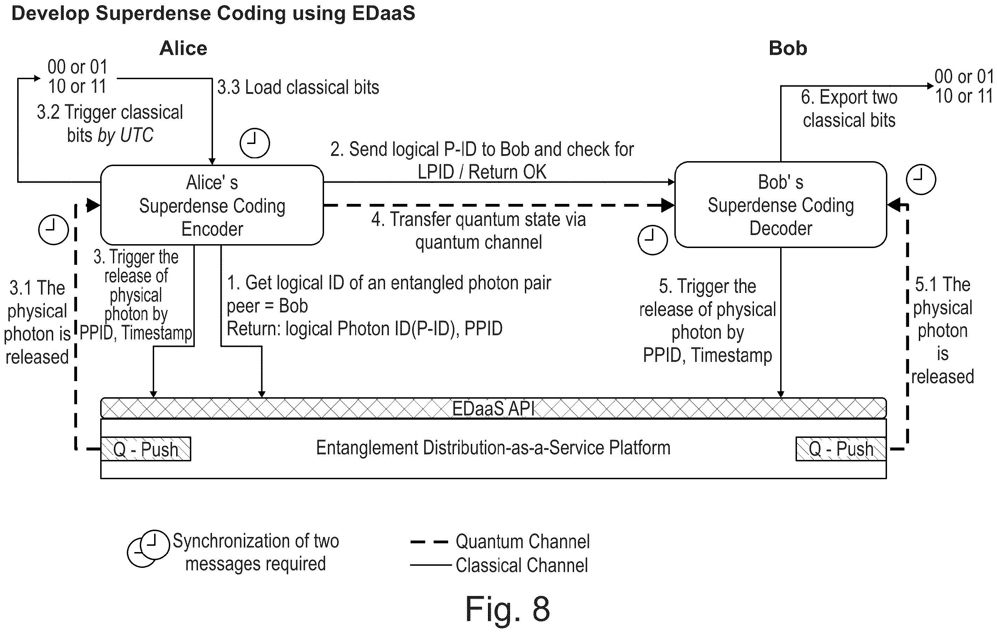

Figure 8 demonstrates the step-by-step process of implementing the Superdense Coding (SDC) protocol using the EDaaS platform to achieve faster quantum communication. In this process, Alice encodes two classical bits of information into one qubit (an entangled photon), which is then transmitted to Bob. Bob uses the entangled photon pair and the received qubit to decode the two classical bits through quantum operations.

The EDaaS platform manages the generation and distribution of entangled photon pairs between Alice and Bob and ensures the synchronization of operations. Q-Push functions play a critical role in the real-time release of the photons involved in the process.

### Step-by-Step Breakdown of the Superdense Coding Process:

- Step 1: Alice's Superdense Coding Encoder initiates the process by querying the EDaaS API to retrieve the Logical Photon ID (LPID) and Physical Photon ID (PPID) of an entangled photon pair shared with Bob. The EDaaS platform responds by providing the LPID (identifying the entangled photon pair) and the PPID (corresponding to Alice's photon stored in EDaaS's quantum memory).
- Step 2: Alice sends the LPID to Bob over a classical communication channel. Bob's Superdense Coding Decoder uses the LPID to check whether the corresponding entangled photon is still available in EDaaS's quantum memory. Bob's system returns an OK message to Alice, confirming that the entangled photon is available and that the protocol can proceed.

- Step 3: Both Alice and Bob trigger the release of their respective entangled photons using the "Trigger the Release of Physical Photon by PPID" function via the EDaaS API. A timestamp is included to ensure synchronized photon release.
- Step 3.1: Alice's entangled photon is released from the quantum memory into her Superdense Coding Encoder via the Q-Push function.
- Step 3.2: Alice encodes her classical bits (either 00,01,10 or 110) into her entangled photon by applying one of four quantum operations. These operations correspond to the classical bit pair Alice wants to transmit.
- Step 3.3: The classical bits are loaded into the photon through quantum operations, completing the encoding process.
- Step 4: After encoding the classical bits into the photon, Alice transmits the modified photon (qubit) to Bob via the quantum channel. Bob still holds the other photon from the entangled photon pair, which was shared prior to the start of the protocol.
- Step 5: Upon receiving Alice's photon, Bob's Superdense Coding Decoder triggers the release of his corresponding entangled photon using the Q-Push function.
- Step 5.1: Bob's photon is released from the quantum memory into his Superdense Coding Decoder at the same synchronized timestamp.
- Step 6: Using both photons - the one received from Alice and the one from the entangled photon pair stored in his quantum memory- Bob performs a Bell State Measurement. This measurement allows Bob to decode the two classical bits of information that Alice encoded using quantum operations. The decoded information is output as two classical bits that correspond to Alice's original message.

### Key Components in the Process:

- The EDaaS platform is responsible for generating and distributing entangled photon pairs between Alice and Bob. This entanglement is critical for the superdense coding protocol, as it allows Alice to send two classical bits using just one a single photon.
- Quantum Channel (dashed line): Used to transmit the entangled photons between Alice and Bob.
- Classical Channel (solid line): Used to send the Logical Photon ID (LPID) and confirmation messages during the process. Classical channels are also used for the final classical bit output after decoding.
- Alice encodes two classical bits using quantum gates applied to her entangled photon. These gates correspond to four possible transformations: Identity III, Pauli-X, Pauli-Z, or Pauli-XZ, allowing her to encode the bit pairs 00,01,10,or11. Bob performs a Bell State Measurement on the entangled photon pair (his own photon and the one he received from Alice) to decode the classical bits.
- The Q-Push function is used by both Alice and Bob to release their respective photons from quantum memory at the precise moment required for the protocol to work. Synchronization is critical in ensuring that the entangled photons are available at the right time for both encoding and decoding.
- The figure highlights the importance of synchronization in superdense coding. The release of photons and transmission of information must be perfectly timed to ensure the successful encoding and decoding of classical bits.

In summary, Figure 8 illustrates the complete flow of the Superdense Coding process using the EDaaS platform. In this process, Alice encodes two classical bits of information into a single qubit by using quantum operations on her entangled photon. The encoded qubit is transmitted to Bob, who then performs a Bell State Measurement on the received photon and his own photon from the shared entangled pair. Based on this measurement, Bob can decode the two classical bits, achieving faster communication than classical protocols by using the Superdense Coding (SDC).

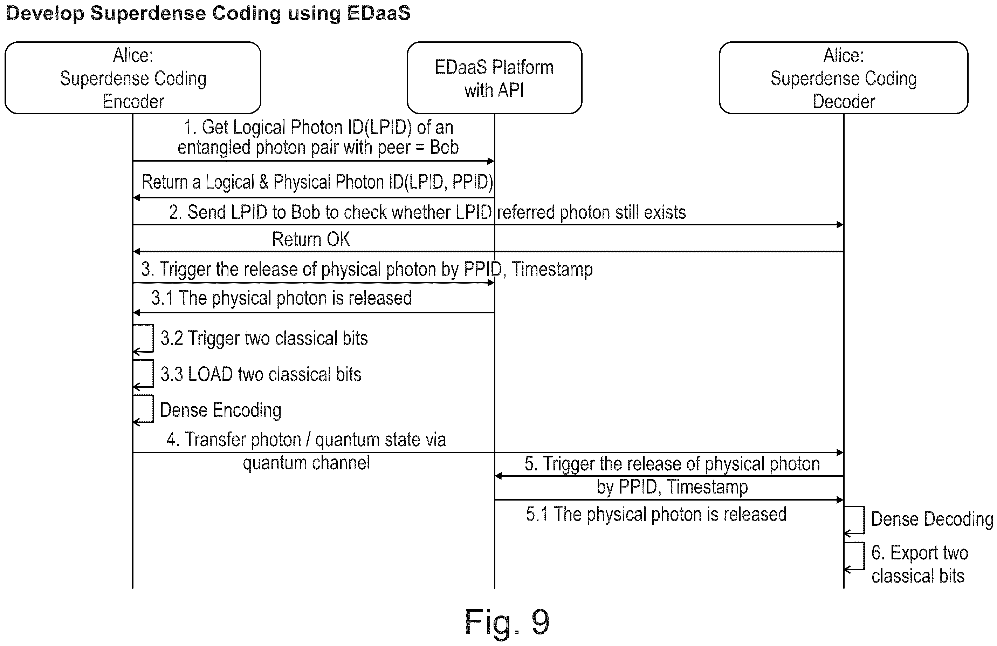

Figure 9 presents the step-by-step flow of the Superdense Coding protocol using the EDaaS platform, detailing the interaction between Alice (the sender) and Bob (the receiver). The EDaaS API facilitates the distribution and release of entangled photons, allowing Alice to encode two classical bits into a single qubit and transmit it to Bob for decoding. The steps are:
- Step 1: Alice requests the Logical Photon ID (LPID) of an entangled photon pair shared with Bob from the EDaaS platform. The platform returns both the Logical Photon ID (LPID) and the Physical Photon ID (PPID), identifying the entangled photons (one for Alice, one for Bob).
- Step 2: Alice sends the LPID to Bob to confirm that his corresponding entangled photon exists. Bob checks the existence of his photon in EDaaS's quantum memory and sends back an OK confirmation.
- Step 3: Alice triggers the release of her entangled photon using the PPID and a synchronized timestamp (Step 3.1).
- Step 3.2: Alice then encodes her two classical bits (00,01,10 or 11) using one of the four quantum operations.
- Step 3.3: After encoding, the two classical bits are loaded into the photon, completing the dense encoding process.
- Step 4: Alice transfers the encoded photon to Bob via the quantum channel.
- Step 5: Bob triggers the release of his entangled photon from quantum memory, using the PPID and a synchronized timestamp (Step 5.1).
- Bob performs dense decoding using the Bell State Measurement on the received photon and his own photon from the entangled pair, enabling him to decode the two classical bits.
- Step 6: After decoding, Bob exports the two classical bits, completing the Superdense Coding process.

In Summary, figure 9 visualizes the complete Superdense Coding process, outlining each interaction between Alice, Bob, and the EDaaS platform. The process includes the retrieval of entangled photon pairs, the synchronized release of photons, the encoding and transmission of classical bits, and decoding by Bob. The EDaaS API ensures efficient management of entangled photon states and real-time quantum communication.

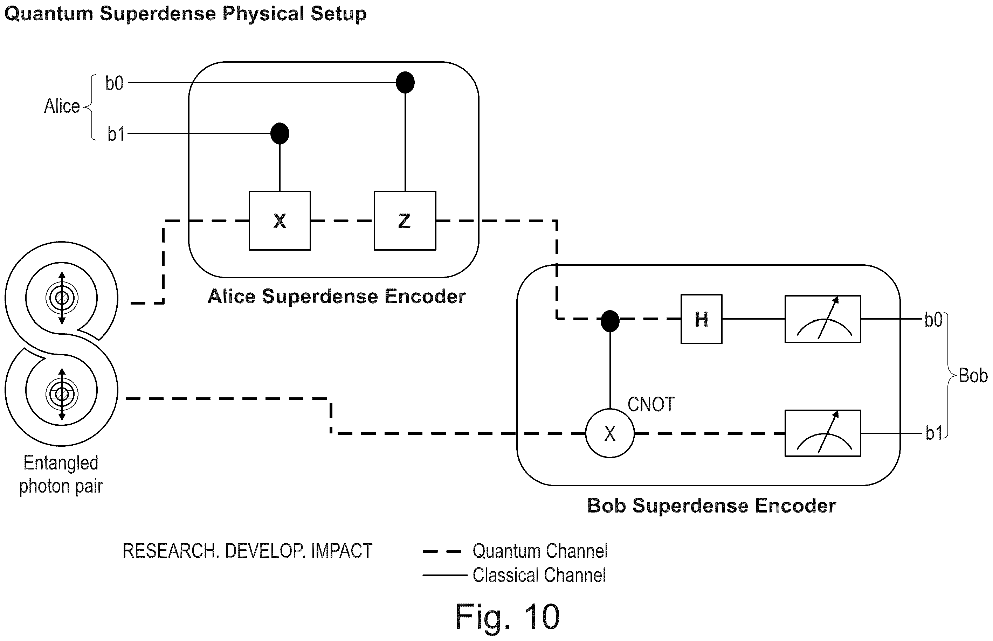

Figure 10 illustrates the physical setup for executing the Superdense Coding protocol between Alice (the sender) and Bob (the receiver) using a pair of entangled photons. This setup visually represents how Alice encodes two classical bits into her photon and how Bob decodes the information after receiving it, using quantum gates and operations. The Key Components of the Setup are:
Entangled Photon Pair:
   - The process begins with a pre-shared entangled photon pair, where one photon is held by Alice and the other by Bob. These photons are entangled, meaning their quantum states are correlated.
Alice's Encoding Operations:
   - Classical Bits (b0, b1): Alice aims to send two classical bits b0 and b1 to Bob using the entangled photon.
   - Quantum Gates:
      Alice applies specific quantum operations on her photon depending on the classical bits she wants to encode:
         If the bits are 00, she applies the Identity (I) gate, leaving the photon unchanged.
         For 01, she applies the Pauli-X gate (a bit-flip operation)
         For 10, she applies the Pauli-Z gate (a phase-flip operation)
         For 11, she applies both the Pauli-X and Pauli-Z gates
      These operations allow Alice to encode the two classical bits into the quantum state of her photon.
   - Photon Transmission: After encoding, Alice sends her photon to Bob over a quantum channel.
Bob's Decoding Operations:
   - CNOT Gate: Upon receiving the photon from Alice, Bob uses a CNOT (Controlled-NOT) gate between his own photon (from the entangled pair) and Alice's photon.
   - Hadamard Gate (H): Bob then applies a Hadamard gate (H) to his photon, transforming its quantum state into a superposition, which is essential for decoding the classical bits.
   - Measurement: Bob performs a quantum measurement on both photons. This measurement reveals the two classical bits (b0, b1) that Alice encoded. The measurement outputs two classical bits, completing the Superdense Coding protocol by decoding the message sent by Alice.

In summary, Figure 10 demonstrates the quantum operations required for Superdense Coding. Alice encodes her two classical bits into her photon using Pauli-X and Pauli-Z gates, depending on the message. Bob then receives the photon, applies a CNOT gate and a Hadamard gate, and performs a measurement to decode the classical bits. This setup showcases how entanglement and quantum operations are used to efficiently transmit classical information.

### Quantum Time Syncronisation (QTS)

In various critical fields such as secure communication, high-precision measurements, and distributed systems, maintaining accurate and synchronized clocks is essential. Classical synchronization methods, while effective to a point, are reaching their limits in terms of precision, reliability, and security. As technology and network demands grow, particularly in applications requiring real-time operations, a more robust synchronization solution is needed. Classical time synchronization methods are not sufficiently precise for emerging applications that require high levels of security, accuracy, and reliability. As systems scale and become more interconnected, these limitations become more pronounced, particularly in fields like:
- Secure Communication: Where even minor timing errors can compromise data integrity.
- High-Precision Measurements: Which depend on synchronized clocks for accurate observations.
- Distributed Systems: Which need to ensure that operations across multiple locations are coordinated in real-time.

The need for accurate time synchronization spans a wide range of sectors:
- Financial Networks: Ensuring that transaction timestamps are synchronized globally, helping to maintain fairness and accuracy in financial trading and record-keeping.
- Telecommunications: Improving data transmission efficiency and ensuring network synchronization, which is critical for minimizing data loss and enhancing throughput.
- Scientific Research: Synchronizing observations and measurements across multiple facilities for experiments requiring high temporal precision.
- Military and Defense: Securing communication and coordination during operations that depend on accurate, real-time synchronization to avoid miscommunication and ensure operational success.

The inventive Quantum Time Synchronization (QTS) system leverages quantum entanglement and classical communication to achieve precise synchronization of clocks between remote locations.

The QTS system works by distributing entangled photon pairs between two or more nodes that need to maintain synchronized clocks. The entangled photons are shared between these locations via the EDaaS platform, ensuring that the clocks remain in perfect correlation, even across long distances. In the case of potential deviations, the quantum properties of the entangled photons allow for real-time adjustments, providing a far more accurate and secure method of time synchronization compared to classical systems.

This system is particularly well-suited for applications that require high security (as quantum states cannot be intercepted without detection) and extreme precision, such as financial transactions, military operations, and scientific experiments.

By combining both quantum entanglement and classical synchronization methods, the QTS system ensures that the clocks at remote locations remain synchronized with high precision. The system allows for secure and accurate time coordination, making it ideal for mission-critical applications that depend on precise synchronized operations.

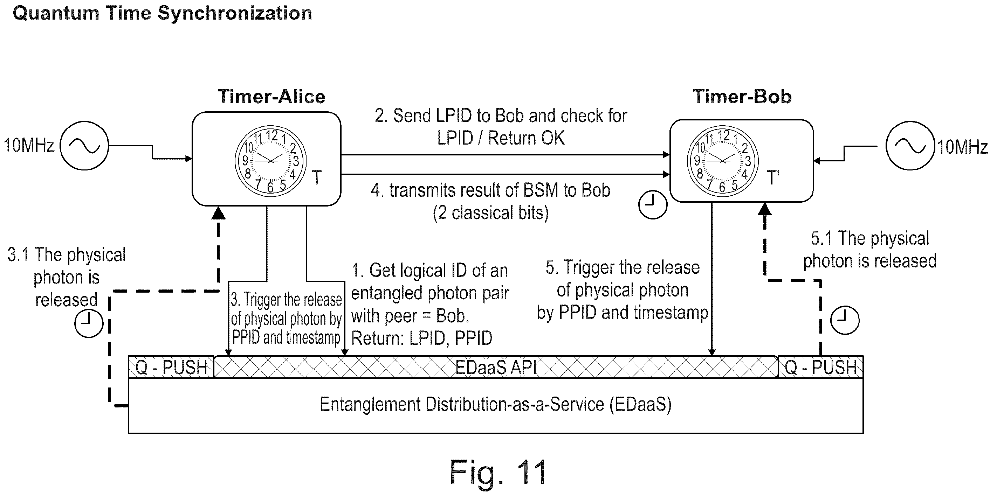

Figure 11 illustrates the setup and process of Quantum Time Synchronization (QTS) between two remote timers, Timer-Alice and Timer-Bob, using entangled photons to ensure precise clock synchronization. This setup demonstrates how the EDaaS platform facilitates the synchronized release of entangled photons and enables both timers to remain in perfect synchronization, even across long distances. The process combines both quantum entanglement and classical communication to achieve high-precision time synchronization. The following steps outline the process:
- Step 1: Timer-Alice initiates the process by querying the EDaaS platform to retrieve the Logical Photon ID (LPID) and Physical Photon ID (PPID) of an entangled photon pair shared with Timer-Bob. The EDaaS platform returns the LPID and PPID, identifying the entangled photons at each location (one photon for Alice and one for Bob).
- Step 2: Timer-Alice sends the LPID to Timer-Bob via a classical communication channel. Timer-Bob checks whether the corresponding photon from the entangled pair is still stored in EDaaS's quantum memory and sends an "OK" confirmation back to Timer-Alice.
- Timer-Alice and Timer-Bob both initiate the release of their respective entangled photons from the quantum memory using the PPID and a synchronized timestamp.
- Step 3: Timer-Alice triggers the release of her photon using the Q-Push function, ensuring that the release occurs at the precise moment required.
- Step 3.1: Alice's photon is released from EDaaS's quantum memory.
- Step 5: Similarly, Timer-Bob triggers the release of his photon using the Q-Push function, synchronizing the release with Alice's photon.
- Step 5.1: Bob's photon is released from EDaaS's quantum memory.
- Step 4: After the entangled photons are released, Timer-Alice performs a Bell State Measurement (BSM) on her photon. The outcome of the BSM is encoded into two classical bits, which are transmitted to Timer-Bob via the classical communication channel. These classical bits ensure that Bob can adjust his clock based on the measurement result and align it with Timer-Alice.
- Timer-Bob receives the classical bits and applies the necessary quantum operations to synchronize his clock with Timer-Alice. Both Timer-Alice and Timer-Bob rely on a 10 MHz frequency reference for clock operations, but the QTS process ensures that both clocks remain perfectly synchronized.

The Key Components in the Figure 11 are
- Entangled Photon Pair: Alice and Bob each hold one photon from a pre-shared entangled photon pair. This entanglement is key to the synchronization process.
- Q-Push Function: The Q-Push function is used by both Timer-Alice and Timer-Bob to release their entangled photons from quantum memory at a precise, synchronized timestamp.
- Bell State Measurement (BSM): Timer-Alice performs a BSM on her photon. The result of this measurement, encoded as two classical bits, is transmitted to Timer-Bob, allowing him to adjust his clock for synchronization.
- Classical and Quantum Channels: Quantum Channel (dashed lines): Used for the release and transmission of entangled photons. Classical Channel (solid lines): Used to transmit the LPID and the classical bits from the Bell State Measurement.

In summary, Figure 11 demonstrates the Quantum Time Synchronization (QTS) process between Timer-Alice and Timer-Bob. Using entangled photon pairs distributed by the EDaaS platform, the process ensures precise synchronization of clocks through the synchronized release of photons and classical communication of measurement results. The Q-Push function plays a crucial role in ensuring that the entangled photons are released in perfect synchronization, allowing both timers to maintain accurate and secure time coordination.

## Claims

1. A system for providing an entanglement distribution for quantum applications in form of an Entanglement Distribution as a Service (EDaaS), comprising:
A network provider plane configured to manage the generation, distribution, forwarding, and storage of entangled quantum states across a quantum network, the network provider plane comprising:
- One or more quantum optical elements especially single photon sources, fiber-optic links, beam splitters, single-photon detectors, and quantum memories for generating and maintaining entangled photonic states;
- A quantum link layer providing quantum optical connections to distribute entangled photon states between directly connected network nodes;
- A quantum network layer configured for dynamic routing of quantum states across multiple optical paths between network nodes;
An Application Programming Interface (EdaaS-API) operable at the service level, said API comprising:
- A state retrieval interface configured to provide applications with logical and physical addresses of stored quantum states within the quantum memories;
- A Q-Push interface configured to enable the export of selected quantum states, based on physical storage addresses, over a quantum channel by triggering the release of entangled photon states;
A software-defined network (SDN) management layer configured to dynamically manage the configuration, monitoring, and routing of entangled states across the quantum network, said SDN management layer comprising:
- A service configuration module for the deployment and configuration of quantum optical connections;
- A resource allocation module for dynamically routing quantum states through optimal optical paths in response to service demands.

2. The system of claim 1 further comprising:
One or more quantum communication applications implemented in an application plane, said application plane comprising:
- A logical layer for managing application-level functions related to quantum communication protocols, including quantum key distribution (QKD), superdense coding, or quantum teleportation;
- A physical layer interfacing with the entangled quantum states distributed by the network provider plane, said physical layer configured to consume and process quantum states stored in quantum memories.

3. The system of claim 2, wherein the quantum communication applications are enabled to access the entangled quantum states maintained by the EDaaS and trigger quantum communication protocols using the API, including quantum key distributionand secure quantum state teleportation.

4. The system of claim 1, wherein the EDaaS-API further comprises an authentication, authorization, and accounting (AAA) module for managing access control to the entanglement distribution service by authorized users and applications.

5. The system of claim 1, wherein the EDaaS-API further comprises a time synchronization interface configured to synchronize the clocks of user applications relative to the clocks of the entanglement distribution service, enabling assignment of quantum states to predefined time slots.

6. The system of one of the proceeding claims, wherein the quantum link layer includes quantum repeaters to extend the range of entanglement distribution across the quantum network.

7. The system of one of the proceeding claims, wherein the quantum network layer dynamically adjusts optical paths based on network congestion, latency, or the availability of quantum states at the network nodes.

8. The system of claim 1, wherein the Q-Push interface of the EDaaS-API is further configured to support real-time export of quantum states for on-demand quantum communication or computational processes, said real-time export allowing applications to trigger the immediate release of entangled photonic states based on application requests over the quantum channel.

9. The system of one of the proceeding claims, wherein the software-defined network (SDN) management layer comprising a monitoring and alarm module for detecting faults or inefficiencies in the entanglement distribution process.

10. The system of one of the proceeding claims, further comprising a quantum error detection and correction module integrated into the network provider plane and/or managed by the software-defined network (SDN) management layer, wherein:
- The quantum error detection module continuously monitors the integrity of entangled quantum states during their generation, distribution, and storage;
- The quantum error correction module applies quantum error correction codes to correct errors caused by noise, decoherence, or transmission losses in the quantum network;
- The system dynamically adjusts routing or storage of entangled states based on detected error rates to maintain high fidelity of the distributed quantum states across the quantum network.

11. A method for providing entanglement distribution in form of an Entanglement Distribution as a Service (EDaaS) across a quantum network, comprising:
Generating entangled quantum states using one or more quantum optical elements, including especially photon sources, fiber-optic links, beam splitters, single-photon detectors, and quantum memories;
Distributing the generated entangled quantum states across a quantum link layer that provides end-to-end quantum optical connections between network nodes;
Dynamically routing the entangled quantum states across multiple optical paths between said network nodes using a quantum network layer;
Storing the entangled quantum states in quantum memories for later retrieval;
Providing an Application Programming Interface (EDaaS-API) at the service level, comprising:
- A state retrieval interface to provide applications with logical and physical addresses of the stored quantum states; and
- A Q-Push interface to enable the export of selected quantum states based on physical storage addresses over a quantum channel by triggering the release of entangled photonic states;
Managing the configuration, monitoring, and routing of the entangled quantum states via a software-defined network (SDN) management layer.

12. The method of claim 11, further comprising the step of providing a time synchronization interface within the EDaaS-API, the time synchronization interface configured to synchronize the clocks of user applications with the clocks of the entanglement distribution service, enabling the assignment of quantum states to predefined time slots.

13. The method of claim 11, further comprising the step of providing an authentication, authorization, and accounting (AAA) module within the EDaaS-API to manage access control for the entanglement distribution service, ensuring only authorized users and applications can access the quantum states.

14. The method of claim 11, further comprising the step of using quantum repeaters in the quantum link layer to extend the range of entanglement distribution across the quantum network, enabling entanglement between distant network nodes.

15. The method of claim 11, wherein the Q-Push interface supports real-time export of quantum states for on-demand quantum communication or computational processes, allowing applications to trigger immediate release of entangled quantum states over the quantum channel.

16. The method of claim 11, further comprising the step of dynamically adjusting optical paths in the quantum network layer based on network congestion, latency, or availability of quantum states, to optimize the distribution of entangled states.
